# EUROPEAN PATENT SPECIFICATION

(11) **EP 2 212 464 B1**
(45) Date of publication and mention of the grant of the patent: **03.09.2014**
(21) Application number: 08845626.4
(22) Date of filing: 28.10.2008
(51) Int. Cl.: A43B 7/00, A43D 11/00, A43D 11/14, B05D 3/14, A43B 7/12, D06M 10/02, D06M 14/08, D06M 14/20, D06M 14/22, D06M 14/26, D06M 14/28, D06M 14/30, D06M 14/32, D06M 14/34, D06M 14/18, D06M 14/24

(54) **USE OF A POLYMERIC COATING FOR REDUCING THE WATER PENETRATION OVER TIME DURING USE IN AN ITEM OF FOOTWEAR**
VERWENDUNG EINER POLYMERBESCHICHTUNG ZUR REDUZIERUNG DES EINDRINGENS VON WASSER IM LAUFE DER VERWENDUNG EINES PAARS VON SCHUHEN
UTILISATION D'UN REVETEMENT POLYMERE POUR REDUIRE LA PENETRATION DE L'EAU DANS UN ARTICLE CHAUSSANT PENDANT SON UTILISATION

(30) Priority: 30.10.2007 GB 0721202
(43) Date of publication of application: 04.08.2010
(73) Proprietor: P2I LTD, Abingdon, Oxfordshire OX14 4SA (GB)
(72) Inventor: COULSON, Stephen, Oxfordshire OX14 5FP (GB)
(74) Representative: Leland, Emma Clare
(86) International application number: PCT/GB2008/003640
(87) International publication number: WO 2009/056809

(56) References cited:
- WO-A-2007/083124

## Description

The present invention relates to a method for treating items which, in use, are subjected to flexing, to reduce their susceptibility to water penetration over time during use and to items which have been so treated.

Plasma deposition techniques have been quite widely used for the deposition of polymeric coatings onto a range of surfaces, and in particular onto fabric surfaces. This technique is recognised as being a clean, dry technique that generates little waste compared to conventional wet chemical methods. Using this method, plasmas are generated from organic molecules, which are subjected to an electrical field. When this is done in the presence of a substrate, the radicals of the compound in the plasma polymerise onto the substrate.

Conventional polymer synthesis tends to produce structures containing repeat units that bear a strong resemblance to the monomer species, whereas a polymer network generated using a plasma can be extremely complex. The properties of the resultant coating can depend upon the nature of the substrate as well as the nature of the monomer used and conditions under which it is deposited.

The use of plasma polymerisation technology in the treatment of a range of fashion accessories, including shoes, so as to protect in particular delicate fabrics from oil or water damage and to make items such as shoes essentially waterproof is described in WO 2007/083124.

The present inventors have now found that by using plasma enhancement technology, not only can a high degree of waterproofing protection be achieved but also the durability of the resistance to water penetration of the item in use is significantly enhanced.

Use of a polymeric coating obtained by exposing the surface of an item of footwear or a constructed upper for an item of footwear which, in use, is subjected to flexing, to plasma processing which uses a plasma which comprises a monomeric compound which undergoes plasma polymerisation to form a water-repellent polymer, and the item of footwear or constructed upper is exposed for a sufficient period of time to allow a polymeric layer to form on the surface thereof, as a water repellent coating which is durable to distortion or increase in size of needle holes in the upper due to flexing thereby reducing its susceptibility to water penetration over time during use.

The water repellent coating may be formed by ionisation or activation technology such as plasma processing

The water repellent coating may be applied by other methods, for example, by dipping or pad applied. The repellent coating may comprise a fluoropolymer, for example polytetrafluoroethylene (PTFE). Alternatively, the repellent coating may comprise a hydrocarbon or silicon based finish. Examples include Teflon^{™} manufactured by Dupont and Oleophobol^{™} manufactured by Ciba.

By means of the invention, a method is provided for enhancing the durability of the resistance of an item to water penetration during flexing in use. This is of particular benefit in the case, for example, of items of footwear, such as shoes and particularly sports shoes such as running shoes or trainers, which are subject to considerable flexing strains during everyday use.

The upper of an item of footwear, such as a shoe, typically includes stitching, either to join different component parts of the upper or as a decorative feature. The stitching is often provided at the front of the shoe for aesthetic reasons and the majority of stitching tends to be located at the flex point of the item of footwear. During use, flexing of the item of footwear causes the needle holes created from the stitching to distort and increase in size. The method of the present invention provides a water repellent coating which is durable to distortion or increase in size of needle holes in the upper, due to flexing.

The method of the present invention provides a water repellent coating to an item of footwear or constructed upper whilst allowing the item of footwear or constructed upper to remain air permeable.

By treating the whole item of footwear or constructed upper of an item of footwear, improved water repellence results. Furthermore, treatment of the whole item of footwear or constructed upper of an item of footwear ensures that regions of the upper which are provided with holes, for example needle holes and seams, are treated. These are regions which come under stress during flexing.

The method may, however, suitably be applied to other items which are subject to flexing in use and for which a high degree of water-proofing protection combined with durability of resistance to water penetration in use is desired. Suitable items include, for example, tents, awnings, umbrellas and sleeping bags.

Enhancing the durability of resistance to water penetration of the item according to the method of the present invention has the advantage that it enables less expensive items to be used without compromising the degree and durability of waterproofing protection achieved. In the case of sports shoes, for example, treating the shoes according to the present method avoids the need for complex manufacturing techniques to introduce physical barriers such as membranes and means that cheaper shoes can be used.

In one embodiment, the item comprises an item of footwear or a constructed upper for an item of footwear. Thus the complete item of footwear, for example a complete shoe, may be treated. Alternatively, a constructed upper, for example of a shoe, may be treated and then attached to a sole to form an item of footwear. The item of footwear or constructed upper may further comprise laces.

In one embodiment, the ionisation or activation technology used is plasma processing, particularly plasma deposition.

According to one embodiment, therefore, the method of the invention comprises exposing the item to plasma in a gaseous state for a sufficient period of time to allow a protective layer to be created on the surface of the item.

The expression "protective layer" refers to a layer, especially a polymeric layer, which provide some protection against liquid damage, and in particular are liquid (such as oil- and water-) repellent. Sources of liquids from which the items are protected include environmental liquids such as water, and in particular rain, as well as any other oil or liquid, which may be accidentally spilled.

Any monomeric compound or gas which undergoes plasma polymerisation to form a water-repellent polymeric coating layer on the surface of the item may suitably be used. Suitable monomers which may be used include those known in the art to be capable of producing water-repellent polymeric coatings on substrates by plasma polymerisation including, for example, carbonaceous compounds having reactive functional groups, particularly substantially -CF₃ dominated perfluoro compounds (see WO 97/38801), perfluorinated alkenes (Wang et al., Chem Mater 1996, 2212-2214), hydrogen containing unsaturated compounds optionally containing halogen atoms or perhalogenated organic compounds of at least 10 carbon atoms ( see WO 98/58117), organic compounds comprising two double bonds (WO 99/64662), saturated organic compounds having an optionally substituted alky chain of at least 5 carbon atoms optionally interposed with a heteroatom (WO 00/05000), optionally substituted alkynes (WO 00/20130), polyether substituted alkenes (US 6,482,531B) and macrocycles containing at least one heteroatom (US 6,329,024B).

Preferably, the item such as the shoe, is provided with a polymeric coating formed by exposing the item to plasma comprising a compound of formula (I) 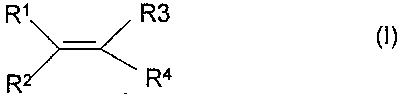 where R¹, R² and R³ are independently selected from hydrogen, alkyl, haloalkyl or aryl optionally substituted by halo; and R⁴ is a group X-R⁵ where R⁵ is an alkyl or haloalkyl group and X is a bond; a group of formula -C(O)O-, -C(O)O(CH₂)ₙY- where n is an integer of from 1 to 10 and Y is a bond or a sulphonamide group; or a group -(O)ₚR⁶(O)_{q}(CH₂)ₜ- where R⁶ is aryl optionally substituted by halo, p is 0 or 1, q is 0 or 1 and t is 0 or an integer of from 1 to 10, provided that where q is 1, t is other than 0., for a sufficient period of time to allow a protective polymeric layer to form on the surface of the item.

Suitable haloalkyl groups for R¹, R², R³ and R⁵ are fluoroalkyl groups. The alkyl chains may be straight or branched and may include cyclic moieties.

For R⁵, the alkyl chains suitably comprise 2 or more carbon atoms, suitably from 2-20 carbon atoms and preferably from 6 to 12 carbon atoms.

For R¹, R² and R³, alkyl chains are generally preferred to have from 1 to 6 carbon atoms.

Preferably R⁵ is a haloalkyl, and more preferably a perhaloalkyl group, particularly a perfluoroalkyl group of formula CₘF₂ₘ₊₁ where m is an integer of 1 or more, suitably from 1-20, and preferably from 4-12 such as 4, 6 or 8.

Suitable alkyl groups for R¹, R² and R³ have from 1 to 6 carbon atoms.

In one embodiment, at least one of R¹, R² and R³ is hydrogen. In a particular embodiment R¹, R², R³ are all hydrogen. In yet a further embodiment however R³ is an alkyl group such as methyl or propyl.

Where X is a group -C(O)O- -C(O)O(CH₂)ₙY-, n is an integer which provides a suitable spacer group. In particular, n is from 1 to 5, preferably about 2.

Suitable sulphonamide groups for Y include those of formula - N(R⁷)SO₂⁻ where R⁷ is hydrogen or alkyl such as C₁₋₄alkyl, in particular methyl or ethyl.

In one embodiment, the compound of formula (I) is a compound of formula (II)

CH₂=CH-R⁵ (II)

where R⁵ is as defined above in relation to formula (I).

In compounds of formula (II), X in formula (I) is a bond.

However in a preferred embodiment, the compound of formula (I) is an acrylate of formula (III)

CH₂=CR⁷C(O)O(CH₂)ₙR⁵ (III)

where n and R⁵ as defined above in relation to formula (I) and R⁷ is hydrogen, C₁₋₁₀alkyl, or C₁₋₁₀haloalkyl. In particular R⁷ is hydrogen or C₁₋₆alkyl such as methyl. A particular example of a compound of formula (III) is a compound of formula (IV) 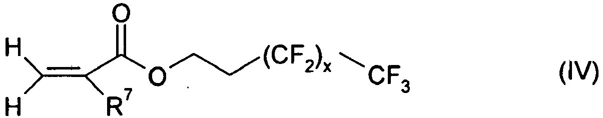 where R⁷ is as defined above, and in particular is hydrogen and x is an integer of from 1 to 9, for instance from 4 to 9, and preferably 7. In that case, the compound of formula (IV) is 1H,1H,2H,2H-heptadecafluorodecylacrylate.

Alternatively, a polymeric coating may be formed by exposing the item to plasma comprising one or more organic monomeric compounds, at least one of which comprises two carbon-carbon double bonds for a sufficient period of time to allow a polymeric layer to form on the surface.

Suitably the compound with more than one double bond comprises a compound of formula (V) 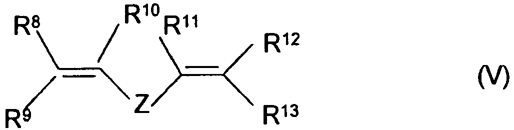 where R⁸, R⁹, R¹⁰, R¹¹, R¹², and R¹³ are all independently selected from hydrogen, halo, alkyl, haloalkyl or aryl optionally substituted by halo; and Z is a bridging group.

Examples of suitable bridging groups Z for use in the compound of formula (V) are those known in the polymer art. In particular they include optionally substituted alkyl groups which may be interposed with oxygen atoms. Suitable optional substituents for bridging groups Z include perhaloalkyl groups, in particular perfluoroalkyl groups.

In a particularly preferred embodiment, the bridging group Z includes one or more acyloxy or ester groups. In particular, the bridging group of formula Z is a group of sub-formula (VI) 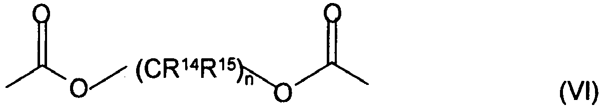 where n is an integer of from 1 to 10, suitably from 1 to 3, each R¹⁹ and R¹⁵ is independently selected from hydrogen, alkyl or haloalkyl.

Suitably R⁸, R⁹, R¹⁰, R¹¹, R¹², and R¹³ are haloalkyl such as fluoroalkyl, or hydrogen. In particular they are all hydrogen.

Suitably the compound of formula (V) contains at least one haloalkyl group, preferably a perhaloalkyl group.

Particular examples of compounds of formula (V) include the following: 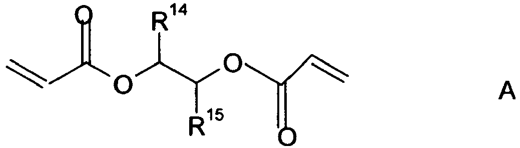 wherein R¹⁴ and R¹⁵ are as defined above, provided that at least one of R¹⁴ or R¹⁵ is other than hydrogen. A particular example of such a compound is a compound of formula B.

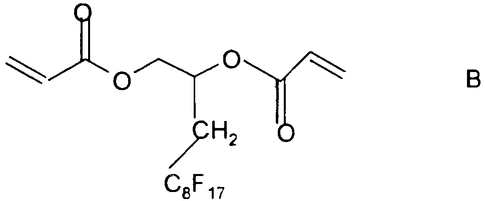

In a further aspect, the polymeric coating is formed by exposing the item to plasma comprising a monomeric saturated organic compound, said compound comprising an optionally substituted alkyl chain of at least 5 carbon atoms optionally interposed with a heteroatom for a sufficient period of time to allow a polymeric layer to form on the surface.

The term "saturated" as used herein means that the monomer does not contain multiple bonds (i.e. double or triple bonds) between two carbon atoms which are not part of an aromatic ring. The term "heteroatom" includes oxygen, sulphur, silicon or nitrogen atoms. Where the alkyl chain is interposed by a nitrogen atom, it will be substituted so as to form a secondary or tertiary amine. Similarly, silicons will be substituted appropriately, for example with two alkoxy groups.

Particularly suitable monomeric organic compounds are those of formula (VII) 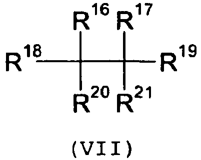 where R¹⁶, R¹⁷, R¹⁸, R¹⁹ and R²⁰ are independently selected from hydrogen, halogen, alkyl, haloalkyl or aryl optionally substituted by halo; and R²¹ is a group X-R²² where R²² is an alkyl or haloalkyl group and X is a bond; a group of formula - C(O)O(CH₂)ₓY- where x is an integer of from 1 to 10 and Y is a bond or a sulphonamide group; or a group -(O)ₚR²³(O)ₛ(CH₂)ₜ-where R²³ is aryl optionally substituted by halo, p is 0 or 1, s is 0 or 1 and t is 0 or an integer of from 1 to 10, provided that where s is 1, t is other than 0.

Suitable haloalkyl groups for R¹⁶, R¹⁷, R¹⁸, R¹⁹, and R²⁰ are fluoroalkyl groups. The alkyl chains may be straight or branched and may include cyclic moieties and have, for example from 1 to 6 carbon atoms.

For R²², the alkyl chains suitably comprise 1 or more carbon atoms, suitably from 1-20 carbon atoms and preferably from 6 to 12 carbon atoms.

Preferably R²² is a haloalkyl, and more preferably a perhaloalkyl group, particularly a perfluoroalkyl group of formula C_{z}F_{2z+1} where z is an integer of 1 or more, suitably from 1-20, and preferably from 6-12 such as 8 or 10.

Where X is a group -C(O)O(CH₂)_{y}Y-, y is an integer which provides a suitable spacer group. In particular, y is from 1 to 5, preferably about 2.

Suitable sulphonamide groups for Y include those of formula - N(R²³)SO₂⁻ where R²³ is hydrogen, alkyl or haloalkyl such as C₁₋₄alkyl, in particular methyl or ethyl.

The monomeric compounds used in the method of the invention preferably comprises a C₆₋₂₅ alkane optionally substituted by halogen, in particular a perhaloalkane, and especially a perfluoroalkane.

In yet a further alternative, item is exposed to plasma comprising an optionally substituted alkyne for a sufficient period of time to allow a polymeric layer to form on the surface.

Suitably the alkyne compounds used in the method of the invention comprise chains of carbon atoms, including one or more carbon-carbon triple bonds. The chains may be optionally interposed with a heteroatom and may carry substituents including rings and other functional groups. Suitable chains, which may be straight or branched, have from 2 to 50 carbon atoms, more suitably from 6 to 18 carbon atoms. They may be present either in the monomer used as a starting material, or may be created in the monomer on application of the plasma, for example by the ring opening

Particularly suitable monomeric organic compounds are those of formula (VIII)

R²⁴-C≡C-X¹-R²⁵ (VIII)

where R²⁴ is hydrogen, alkyl, cycloalkyl, haloalkyl or aryl optionally substituted by halo;
X¹ is a bond or a bridging group; and
R²⁵ is an alkyl, cycloalkyl or aryl group optionally substituted by halogen.

Suitable bridging groups X¹ include groups of formulae

-(CH₂)ₛ-, -CO₂(CH₂)ₚ-, -(CH₂)ₚO(CH₂)_{q}-, -(CH₂)ₚN(R²⁶)CH₂)_{q}-,

-(CH₂)ₚN(R²⁶)SO₂-, where s is 0 or an integer of from 1 to 20, p and q are independently selected from integers of from 1 to 20; and R²⁶ is hydrogen, alkyl, cycloalkyl or aryl. Particular alkyl groups for R²⁶ include C₁₋₆ alkyl, in particular, methyl or ethyl.

Where R²⁴ is alkyl or haloalkyl, it is generally preferred to have from 1 to 6 carbon atoms.

Suitable haloalkyl groups for R²⁴ include fluoroalkyl groups. The alkyl chains may be straight or branched and may include cyclic moieties. Preferably however R²⁴ is hydrogen.

Preferably R²⁵ is a haloalkyl, and more preferably a perhaloalkyl group, particularly a perfluoroalkyl group of formula CᵣF₂ᵣ₊₁ where r is an integer of 1 or more, suitably from 1-20, and preferably from 6-12 such as 8 or 10.

In a preferred embodiment, the compound of formula (VIII) is a compound of formula (IX)

CH=C(CH₂)ₛ-R²⁷ (IX)

where s is as defined above and R²⁷ is haloalkyl, in particular a perhaloalkyl such as a C₆₋₁₂ perfluoro group like C₆F₁₃.

In an alternative preferred embodiment, the compound of formula (VIII) is a compound of formula (X)

CH≡C(O)O(CH₂)ₚR²⁷ (X)

where p is an integer of from 1 to 20, and R²⁷ is as defined above in relation to formula (IX) above, in particular, a group C₈F₁₇. Preferably in this case, p is an integer of from 1 to 6, most preferably about 2.

Other examples of compounds of formula (I) are compounds of formula (XI)

CH≡C(CH₂)ₚO(CH₂)_{q}R²⁷, (XI)

where p is as defined above, but in particular is 1, q is as defined above but in particular is 1, and R²⁷ is as defined in relation to formula (IX), in particular a group C₆F₁₃;
or compounds of formula (XII)

CH≡C(CH₂)ₚN(R²⁶) (CH₂)_{q} R²⁷ (XII)

where p is as defined above, but in particular is 1, q is as defined above but in particular is 1, R²⁶ is as defined above an in particular is hydrogen, and R²⁷ is as defined in relation to formula (IX), in particular a group C₇F₁₅;
or compounds of formula (XIII)

CH≡C(CH₂)ₚN(R²⁶)SO₂R²⁷ (XIII)

where p is as defined above, but in particular is 1, R²⁶ is as defined above an in particular is ethyl, and R²⁷ is as defined in relation to formula (IX), in particular a group C₈F₁₇.

In an alternative embodiment, the alkyne monomer used in the process is a compound of formula (XIV)

R²⁸C≡C (CH₂)ₙ SiR²⁹R³⁰R³¹ (XIV)

where R²⁸ is hydrogen, alkyl, cycloalkyl, haloalkyl or aryl optionally substituted by halo, R²⁹, R³⁰ and R³¹ are independently selected from alkyl or alkoxy, in particular C₁₋₆ alkyl or alkoxy.

Preferred groups R²⁸ are hydrogen or alkyl, in particular C₁₋₆ alkyl.

Preferred groups R²⁹, R³⁰ and R³¹ are C₁₋₆ alkoxy in particular ethoxy.

Precise conditions under which the plasma polymerization takes place in an effective manner will vary depending upon factors such as the nature of the polymer, the item being treated and so on and will be determined using routine methods known in the art.

Suitable plasmas for use in the method of the invention include non-equilibrium plasmas such as those generated by radiofrequencies (RF), microwaves or direct current (DC). They may operate at atmospheric or sub-atmospheric pressures as are known in the art. In particular however, they are generated by radiofrequencies (Rf).

Various forms of equipment may be used to generate gaseous plasmas. Generally these comprise containers or plasma chambers in which plasmas may be generated. Particular examples of such equipment are described for instance in WO2005/089961 and WO02/28548, but many other conventional plasma generating apparatus are available.

In the method, in general, the substrate to be treated is placed within a plasma chamber together with one or more monomers, which are able to generate the target polymeric substance, in an essentially gaseous state, a glow discharge is ignited within the chamber and a suitable voltage, which may preferably be pulsed, is applied.

As used herein, the expression "in an essentially gaseous state" refers to gases or vapours, either alone or in mixture, as well as aerosols.

The gas present within the plasma chamber may comprise a vapour of the monomeric compound alone, but it may be combined with a carrier gas, in particular, an inert gas such as helium or argon. In particular helium is a preferred carrier gas, if a carrier is required, as this can minimise fragmentation of the monomer.

When used as a mixture, the relative amounts of the monomer vapour to carrier gas is suitably determined in accordance with procedures which are conventional in the art. The amount of monomer added will depend to some extent on the nature of the particular monomer being used, the nature of the substrate, the size of the plasma chamber and so forth. Generally, in the case of conventional chambers, monomer is delivered in an amount of from 50-1000mg/minute, for example at a rate of from 10-150mg/minute. It will be appreciated, however, that the rate will very much depends on the reactor size chosen and the number of substrates required to be processed at once; this inturn depends on considerations such as the annual through-put required and the capital out-lay.

Carrier gas such as helium is suitably administered at a constant rate for example at a rate of from 5-90 standard cubic centimetres per minute (sccm), for example from 15-30 sccm. In some instances, the ratio of monomer to carrier gas will be in the range of from 100:0 to 1:100, for instance in the range of from 10:0 to 1:100, and in particular about 1:0 to 1:10. The precise ratio selected will be so as to ensure that the flow rate required by the process is achieved.

In some cases, a preliminary continuous power plasma may be struck for example for from 15 seconds to 10 minutes within the chamber. This may act as a surface pre-treatment or activation step, ensuring that the monomer attaches itself readily to the surface, so that as polymerisation occurs, the deposition "grows" on the surface. The pre-treatment step may be conducted before monomer is introduced into the chamber, in the presence of only an inert gas.

The plasma is then suitably switched to a pulsed plasma to allow polymerisation to proceed, at least when the monomer is present.

In all cases, a glow discharge is suitably ignited by applying a high frequency voltage, for example at 13.56MHz. This is applied using electrodes, which may be internal or external to the chamber, generally used for large and small chambers respectively.

Suitably the gas, vapour or gas mixture is supplied at a rate of at least 1 standard cubic centimetre per minute (sccm) and preferably in the range of from 1 to 100sccm.

In the case of the monomer vapour, this is suitably supplied at a rate of from 80-1000mg/minute whilst the continuous or pulsed voltage is applied. It may, however, be more appropriate for industrial scale use to have a fixed total monomer delivery that will vary with respect to the defined process time and will also depend upon the nature of the monomer and the technical effect required.

Gases or vapours may be delivered into the plasma chamber using any conventional method. For example, they may be drawn, injected or pumped into the plasma region. In particular, where a plasma chamber is used, gases or vapours may be drawn into the chamber as a result of a reduction in the pressure within the chamber, caused by use of an evacuating pump. Alternatively, they may be pumped , sprayed, dripped, electrostatically ionises or injected into the chamber or delivered by any other known means for delivering a liquid or vapour to a vessel.

Polymerisation is suitably effected using vapours of compounds of formula (I), which are maintained at pressures of from 0.1 to 400mtorr.

The applied fields are suitably of power of from 5 to 500W, suitably at about 10 - 200 W peak power, applied as a continuous or pulsed field. If pulses are required, they can be applied in a sequence which yields very low average powers, for example in a sequence in which the ratio of the time on : time off is in the range of from 1:500 to 1:1500. Particular examples of such sequence are sequences where power is on for 20-50µs, for example about 30µs, and off for from 1000µs to 30000µs, in particular about 20000µs. Typical average powers obtained in this way are 0.01W.

The total RF power required for the processing of a batch of shoes is suitably applied from 30 seconds to 90 minutes, preferably from 1 minute to 10 minutes, depending upon the nature of the compound of formula (I) and the type and number of items being enhanced in the batch.

Suitably a plasma chamber used is of sufficient volume to accommodate items such as tents and sleeping bags.

A particularly suitable apparatus and method for treating items in accordance with the invention is described in WO2005/089961, the content of which is hereby incorporated by reference.

In particular, when using high volume chambers of this type, the plasma is created with a voltage as a pulsed field, at an average power of from 0.001 to 500W/m³, for example at from 0.001 to 100W/m³ and suitably at from 0.005 to 0.5W/m³.

These conditions are particularly suitable for depositing good quality uniform coatings, in large chambers, for example in chambers where the plasma zone has a volume of greater than 500cm³, for instance 0.1m³ or more, such as from 0.5m³-10m³ and suitably at about 1m³. The layers formed in this way have good mechanical strength.

The dimensions of the chamber will be selected so as to accommodate the particular items being treated. For instance, generally cylindrical chambers may be suitable for a wide range of applications, but if necessary, elongate or rectangular chambers may be constructed or indeed cuboid, or of any other suitable shape.

The chamber may be a sealable container, to allow for batch processes, or it may comprise inlets and outlets for the items, to allow it to be utilised in a semi-continuous process. In particular in the latter case, the pressure conditions necessary for creating a plasma discharge within the chamber are maintained using high volume pumps, as is conventional for example in a device with a "whistling leak". However it will also be possible to process items of footwear at atmospheric pressure, or close to, negating the need for "whistling leaks"

The applied fields are suitably of power of from 20 to 500W, suitably at about 100W peak power, applied as a pulsed field. The pulses are applied in a sequence which yields very low average powers, for example in a sequence in which the ratio of the time on : time off is in the range of from 1:3 to 1:1500, depending upon the nature of the monomer gas employed. Although for monomers which may be difficult to polymerise, time on : time off ranges may be at the lower end of this range, for example from 1:3 to 1:5, many polmerisations can take place with a time on:time off range of 1:500 to 1:1500. Particular examples of such sequence are sequences where power is on for 20-50µs, for example about 30µs, and off for from 1000µs to 30000µs, in particular about 20000µs. Typical average powers obtained in this way are 0.01W.

The fields are suitably applied from 30 seconds to 90 minutes, preferably from 5 to 60 minutes, depending upon the nature of the monomer and the substrate, and the nature of the target coating required.

Items which have been treated in accordance with the method described above and which are novel form a further aspect of the invention.

Thus in particular, the invention provides a shoe treated in accordance with the method as described above. Preferred treatments are as outlined above.

The invention will now be particularly described by way of example.

### Example 1

Four pairs of golf shoes were placed into a plasma chamber with a processing volume of ∼ 300 litres. The chamber was connected to supplies of the required gases and or vapours, via a mass flow controller and/or liquid mass flow meter and a mixing injector or monomer reservoir as appropriate.

The chamber was evacuated to between 3 - 10 mtorr base pressure before allowing helium into the chamber at 20 sccm until a pressure of 80 mtorr was reached. A continuous power plasma was then struck for 4 minutes using RF at 13.56 MHz at 300 W.

After this period, 1H,1H,2H,2H-heptadecafluorodecylacylate (CAS # 27905-45-9) of formula 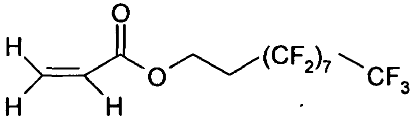 was brought into the chamber at a rate of 120 milligrams per minute and the plasma switched to a pulsed plasma at 30 micro seconds on-time and 20 milliseconds off-time at a peak power of 100 W for 40 minutes. On completion of the 40 minutes the plasma power was turned off along with the processing gases and vapours and the chamber evacuated back down to base pressure. The chamber was then vented to atmospheric pressure and the shoes removed.

These were tested for durability of resistance to water penetration after extended flexing (50,000 flexes at 20 mm immersion depth) according to standard test methods. The results were compared for the same shoes but without treatment.

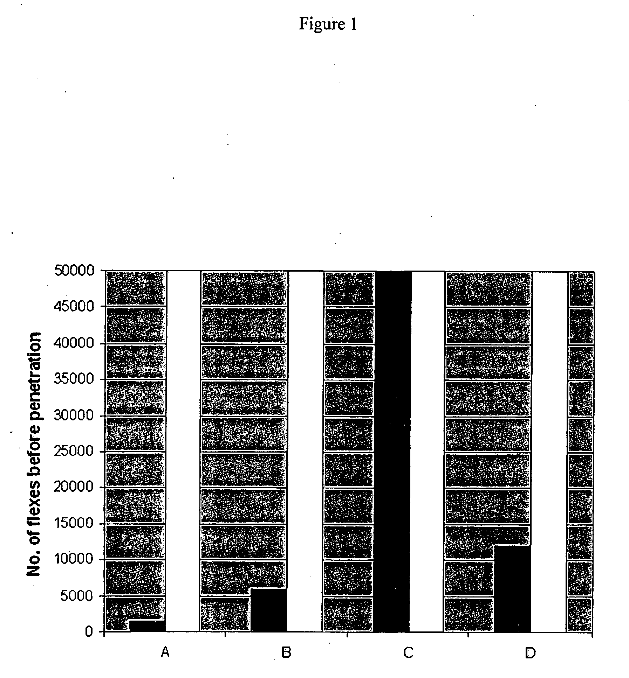

In most cases, the number of flexes before water penetration occurs was significantly higher for the treated shoe than the untreated shoe, as can be seen from the results presented in Figure 1. In this Figure, column A shows the results obtained for a membrane, seam sealed, waterproof leather shoe treated according to the above method (unshaded) compared to an untreated shoe (shaded). Columns B, C and D show the results obtained for seam sealed, waterproof leather shoes without a membrane(B), waterproof leather shoes only (that is, without a membrane or seam sealing) (C) and non waterproof leather shoes (D)and the corresponding untreated counterparts. In all cases, the durability of the treated shoe to water penetration exceeded the industry standard requirements whereas all of the untreated shoes, including those containing membranes, exhibited unacceptable durability of resistance to water penetration.

## Claims

1. Use of a polymeric coating obtained by exposing the surface of an item of footwear or a constructed upper for an item of footwear which, in use, is subjected to flexing, to plasma processing which uses a plasma which comprises a monomeric compound which undergoes plasma polymerisation to form a water-repellent polymer, and the item of footwear or constructed upper is exposed for a sufficient period of time to allow a polymeric layer to form on the surface thereof, as a water repellent coating which is durable to distortion or increase in size of needle holes in the upper due to flexing thereby reducing its susceptibility to water penetration over time during use.

2. A use according to claim 1 wherein the item of footwear or constructed upper further comprises laces.

3. A use according to any of claims 1 or 2 wherein the item of footwear or constructed upper is a sports shoe or a constructed upper for a sports shoe.

4. A use according to any one of the preceding claims wherein the item of footwear or constructed upper is exposed to pulsed plasma within a plasma deposition chamber.

5. A use according to any one of the preceding claims wherein the monomeric compound is a compound of formula (I) 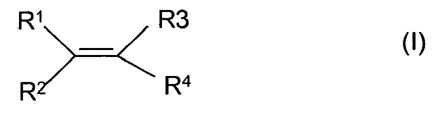 where R¹, R² and R³ are independently selected from hydrogen, alkyl, haloalkyl or aryl optionally substituted by halo; and R⁴ is a group X-R⁵ where R⁵ is an alkyl or haloalkyl group and X is a bond; a group of formula -C(O)O-, -C(O)O(CH₂)ₙY- where n is an integer of from 1 to 10 and Y is a bond or a sulphonamide group; or a group -(O)ₚR⁶(O)_{q}(CH₂)ₜ- where R⁶ is aryl optionally substituted by halo, p is 0 or 1, q is 0 or 1 and t is 0 or an integer of from 1 to 10, provided that where q is 1, t is other than 0, for a sufficient period of time to allow a protective polymeric layer to be created on the surface of the item.

6. A use according to claim 5, wherein the compound of formula (I) is a compound of formula (II)
CH₂=CH-R⁵ (II)
where R⁵ is as defined in claim 5 or a compound of formula (III)
CH₂=CR⁷C (O) O (CH₂)ₙR⁵ (III)
wherein n and R⁵ as defined in claim 5 and R⁷ is hydrogen, C₁₋₁₀ alkyl, or C₁₋₁₀haloalkyl.

7. A use according to claim 5 wherein the compound of formula (III) is a compound of formula (IV) 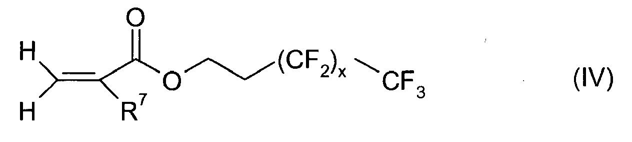 where R⁷ is as defined in claim 6 and x is an integer of from 1 to 9.

8. A use according to claim 7 wherein the compound of formula (IV) is 1H,1H,2H,2H-heptadecafluorodecylacrylate.

9. A use according to any preceding claim, wherein the item of footwear or constructed upper to be treated is placed within a plasma chamber together with one or more monomers, which are able to generate the target polymeric substance, in an essentially gaseous state, a glow discharge is ignited within the chamber and a suitable pulsed voltage is applied

10. A use according to claim 9, wherein pulses are applied in a sequence in which the ratio of the time on : time off is in the range of from 1:500 to 1:1500.

11. A use according to any one of the preceding claims, wherein the item of footwear or constructed upper is a shoe and wherein the reduction in susceptibility to water penetration occurs for at least 50,000 flexes of the shoe.

12. A use according to any one of the preceding claims wherein the item of footwear or constructed upper comprises a membrane, seam sealed, waterproof leather shoe.

13. A use according to any one of claims 1 to 11, wherein the item of footwear or constructed upper comprises a seam sealed, waterproof leather shoe without a membrane.

14. A use according to any one of claims 1 to 11, wherein the item of footwear or constructed upper comprises a waterproof leather shoe without a membrane or seam sealing.

15. A use according to any one of claims 1 to 11, wherein the item of footwear or constructed upper comprises a non-waterproof leather shoe.

## Patentansprüche

1. Verwendung einer Polymerbeschichtung, welche dadurch erhalten wird, dass die Oberfläche eines Fußbekleidungsartikels oder eines gefertigten Obermaterials für einen Fußbekleidungsartikel, welcher während des Gebrauchs verbogen wird, einem Plasmabearbeitungsverfahren unterzogen wird, welches ein Plasma verwendet, das eine monomere Verbindung umfasst, die eine Plasmapolymerisation durchläuft, um ein wasserabweisendes Polymer zu bilden, und wobei der Fußbekleidungsartikel oder das gefertigte Obermaterial dem Plasmabearbeitungsverfahren lange genug unterzogen wird, dass sich auf dessen Oberfläche eine Polymerschicht bilden kann, als wasserabweisende Beschichtung, welche beständig gegenüber Verformung oder sich im Obermaterial aufgrund von Verbiegen ausweitenden Stichlöchern ist und somit dessen Anfälligkeit für das Eindringen von Wasser im Laufe der Verwendung reduziert.

2. Verwendung nach Anspruch 1, worin der Fußbekleidungsartikel oder das gefertigte Obermaterial ferner Schnürsenkel umfasst.

3. Verwendung nach einem der Ansprüche 1 oder 2, worin der Fußbekleidungsartikel oder das gefertigte Obermaterial ein Sportschuh oder ein für einen Sportschuh gefertigtes Obermaterial ist.

4. Verwendung nach einem der vorhergehenden Ansprüche, worin der Fußbekleidungsartikel oder das gefertigte Obermaterial in einer Plasmaabscheidekammer gepulstem Plasma ausgesetzt wird.

5. Verwendung nach einem der vorhergehenden Ansprüche, worin die monomere Verbindung eine Verbindung der Formel (I) ist 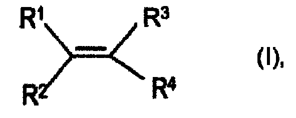 worin R¹, R² und R³ unabhängig voneinander ausgewählt sind aus Wasserstoff, Alkyl, Haloalkyl oder gegebenenfalls Halogen-substituiertem Aryl; und R⁴ eine Gruppe X-R⁵ ist, worin R⁵
eine Alkyl- oder Haloalkylgruppe und X eine Bindung ist; einer Gruppe der Formel -C(O)O-, -C(O)O(CH₂)ₙY-, worin n eine ganze Zahl von 1 bis 10 und Y eine Bindung oder eine Sulfonamidgruppe ist; oder einer Gruppe -(O)ₚR⁶(O)_{q}(CH₂)ₜ-, worin R⁶ gegebenenfalls Halogen-substituiertes Aryl ist, p gleich 0 oder 1 ist, q gleich 0 oder 1 ist und t gleich 0 oder eine ganze Zahl von 1 bis 10 ist, unter der Voraussetzung, dass, wenn q gleich 1 ist, t ungleich 0 ist, für eine ausreichend lange Zeit, dass auf der Oberfläche des Artikels eine schützende Polymerschicht gebildet werden kann.

6. Verwendung nach Anspruch 5, worin die Verbindung der Formel (I) eine Verbindung der Formel (II) ist
CH₂=CH-R⁵ (II),
worin R⁵ wie in Anspruch 5 definiert oder eine Verbindung der Formel (III) ist
CH₂=CR⁷C(O)O(CH₂)ₙR⁵ (III),
worin n und R⁵ wie in Anspruch 5 definiert sind und R⁷ Wasserstoff, C₁₋₁₀-Alkyl oder C₁₋₁₀-Haloalkyl ist.

7. Verwendung nach Anspruch 5, worin die Verbindung der Formel (III) eine Verbindung der Formel (IV) ist 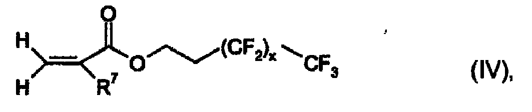 worin R⁷ wie in Anspruch 6 definiert und x eine ganze Zahl von 1 bis 9 ist.

8. Verwendung nach Anspruch 7, worin die Verbindung nach Formel (IV) 1H,1H,2H,2H-Heptadecafluorodecylacrylat ist.

9. Verwendung nach einem der vorhergehenden Ansprüche, worin der zu behandelnde Fußbekleidungsartikel oder das zu behandelnde gefertigte Obermaterial zusammen mit einem oder mehreren Monomeren in im Wesentlichen gasförmigem Zustand, welche in der Lage sind, die gewünschte Polymersubstanz zu generieren, in einer Plasmakammer platziert, eine Glimmentladung in der Kammer gezündet und eine geeignete gepulste Spannung angelegt wird.

10. Verwendung nach Anspruch 9, worin die Pulse in einer Abfolge angelegt werden, bei welcher das Verhältnis Zeitdauer An : Zeitdauer Aus im Bereich von 1:500 bis 1:1500 liegt.

11. Verwendung nach einem der vorhergehenden Ansprüche, worin der Fußbekleidungsartikel oder das gefertigte Obermaterial ein Schuh ist und worin die verringerte Anfälligkeit für das Eindringen von Wasser für mindestens 50.000 Verbiegungen des Schuhs vorhält.

12. Verwendung nach einem der vorhergehenden Ansprüche, worin der Fußbekleidungsartikel oder das gefertigte Obermaterial einen wasserdichten Lederschuh mit Membran und versiegelten Nähten umfasst.

13. Verwendung nach einem der Ansprüche 1 bis 11, worin der Fußbekleidungsartikel oder das gefertigte Obermaterial einen wasserdichten Lederschuh mit versiegelten Nähten ohne Membran umfasst.

14. Verwendung nach einem der Ansprüche 1 bis 11, worin der Fußbekleidungsartikel oder das gefertigte Obermaterial einen wasserdichten Lederschuh ohne Membran oder versiegelte Nähte umfasst.

15. Verwendung nach einem der Ansprüche 1 bis 11, worin der Fußbekleidungsartikel oder das gefertigte Obermaterial einen nicht wasserdichten Lederschuh umfasst.

## Revendications

1. Utilisation d'un revêtement polymère obtenu en exposant la surface d'un article chaussant ou d'une tige assemblée pour article chaussant qui, en service, est soumise à une flexion, à un traitement au plasma qui emploie un plasma comprenant un composé monomère qui est soumis à une polymérisation par plasma pour former un polymère hydrophobe, et l'article chaussant ou la tige assemblée est exposé(e) pendant une période suffisante pour permettre la formation d'une couche polymère à la surface de celui/celle-ci en tant que revêtement hydrophobe résistant aux déformations ou à l'agrandissement des trous d'aiguille dans la tige dus à la flexion, réduisant ainsi, en service, sa sensibilité à la pénétration de l'eau au fil du temps.

2. Utilisation selon la revendication 1, dans laquelle l'article chaussant ou la tige assemblée comprend en outre des lacets.

3. Utilisation selon l'une quelconque des revendications 1 ou 2, dans laquelle l'article chaussant ou la tige assemblée est une chaussure de sport ou une tige assemblée pour chaussure de sport.

4. Utilisation selon l'une quelconque des revendications précédentes, dans laquelle l'article chaussant ou la tige assemblée est exposé(e) à un plasma pulsé à l'intérieur d'une chambre de dépôt par plasma.

5. Utilisation selon l'une quelconque des revendications précédentes, dans laquelle le composé monomère est un composé de formule (I) : 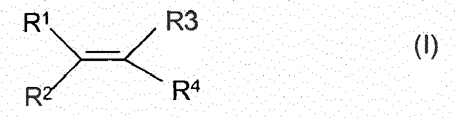 dans laquelle R¹, R² et R³ sont indépendamment choisis parmi l'hydrogène, un groupe alkyle, halogénoalkyle ou aryle éventuellement substitué par un groupe halogéno ; et R⁴ est un groupe X-R⁵ dans lequel R⁵ est un groupe alkyle ou halogénoalkyle et X est une liaison ; un groupe de formule -C(O)O-, -C(O)O(CH₂)ₙY- dans lequel n est un entier valant 1 à 10 et Y est une liaison ou un groupe sulfonamide ; ou un groupe -(O)ₚR⁶(O)_{q}(CH₂)ₜ-dans lequel R⁶ est un groupe aryle éventuellement substitué par un groupe halogéno, p vaut 0 ou 1, q vaut 0 ou 1 et t vaut 0 ou un entier allant de 1 à 10, à condition que q vaille 1, t est non nul, pendant une période suffisante afin de permettre la création d'une couche polymère protectrice à la surface de l'article.

6. Utilisation selon la revendication 5, dans laquelle le composé de formule (I) est un composé de formule (II)
CH₂=CH-R⁵ (II)
dans laquelle R⁵ est tel que défini dans la revendication 5 ou un composé de formule (III) :
CH₂=CR⁷C(O)O(CH₂)ₙR⁵ (III)
dans laquelle n et R⁵ sont tels que définis dans la revendication 5 et R⁷ est l'hydrogène, un groupe alkyle en C₁-C₁₀ ou un groupe halogénoalkyle en C₁-C₁₀.

7. Utilisation selon la revendication 5, dans laquelle le composé de formule (III) est un composé de formule (IV) : 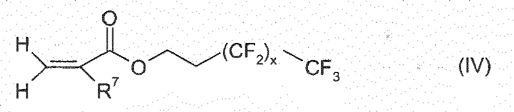 dans laquelle R⁷ est tel que défini dans la revendication 6 et x est un entier valant 1 à 9.

8. Utilisation selon la revendication 7, dans laquelle le composé de formule (IV) est le 1H,1H,2H,2H-heptadécafluorodécylacrylate.

9. Utilisation selon l'une quelconque des revendications précédentes, dans laquelle l'article chaussant ou la tige assemblée à traiter est placé(e) à l'intérieur de la chambre à plasma conjointement avec un ou plusieurs monomères, qui sont capables de générer la substance polymère cible, dans un état sensiblement gazeux, une décharge luminescente est générée à l'intérieur de la chambre et une tension pulsée adaptée est appliquée.

10. Utilisation selon la revendication 9, dans laquelle les impulsions sont appliquées dans un ordre dans lequel le rapport marche/arrêt se situe dans la plage allant de 1/500 à 1/1500.

11. Utilisation selon l'une quelconque des revendications précédentes, dans laquelle l'article chaussant ou la tige assemblée est une chaussure et dans laquelle la réduction de la sensibilité à la pénétration de l'eau intervient pendant au moins 50 000 flexions de la chaussure.

12. Utilisation selon l'une quelconque des revendications précédentes, dans laquelle l'article chaussant ou la tige assemblée comprend une chaussure en cuir imperméable à coutures étanches et à membrane.

13. Utilisation selon l'une quelconque des revendications 1 à 11, dans laquelle l'article chaussant ou la tige assemblée comprend une chaussure en cuir imperméable à coutures étanches et sans membrane.

14. Utilisation selon l'une quelconque des revendications 1 à 11, dans laquelle l'article chaussant ou la tige assemblée comprend une chaussure en cuir imperméable sans membrane ni coutures étanches.

15. Utilisation selon l'une quelconque des revendications 1 à 11, dans laquelle l'article chaussant ou la tige assemblée comprend une chaussure en cuir non imperméable.
